# EUROPEAN PATENT APPLICATION

(11) **EP 4 521 665 A1**
(43) Date of publication of application: **12.03.2025**
(21) Application number: 23851542.3
(22) Date of filing: 17.07.2023
(51) Int. Cl.: H04L 1/00

(54) **CHANNEL STATE INFORMATION FEEDBACK METHOD, RECEIVING METHOD AND FEEDBACK APPARATUS, AND COMMUNICATION NODE**

(30) Priority: 10.08.2022 CN 202210959508
(71) Applicant: ZTE Corporation, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); LI, Lun, Shenzhen, Guangdong 518057 (CN); LIU, Wenfeng, Shenzhen, Guangdong 518057 (CN)
(74) Representative: Aipex B.V.
(86) International application number: PCT/CN2023/107712
(87) International publication number: WO 2024/032319

(57) **Abstract**

Provided are a channel state information feedback method, a channel state information receiving method, a channel state information feedback apparatus, a channel state information receiving apparatus, and a communication node. The feedback method includes splitting channel state information corresponding to at least one CSI report into C pieces of sub-channel state information, and transmitting all or part of the C pieces of sub-channel state information over at least two uplink transmission resources. The multiple uplink transmission resources satisfy a preset timing relation, and the transmission content on an uplink transmission resource is determined according to the preset timing relation.

## Description

This application claims priority to Chinese Patent Application No. 202210959508.9 filed with the China National Intellectual Property Administration (CNIPA) on Aug. 10, 2022, the disclosure of which is incorporated herein by reference in its entirety.

### TECHNICAL FIELD

The present disclosure relates to the field of communications and, in particular, a channel state information feedback method, a channel state information receiving method, a channel state information feedback apparatus, a channel state information receiving apparatus, and a communication node.

### BACKGROUND

As artificial intelligence (AI)/machine learning (ML) has been widely used in various industries, the introduction of AI/MI, into a wireless communication system to obtain channel state information has been widely studied, and one of the main application scenarios is CSI feedback. Generally, the CSI feedback is implemented in an autoencoder-based manner. An autoencoder includes one encoder and one decoder. The encoder is provided on a terminal side while the decoder is provided on a base station side.

In the CSI feedback, a base station allocates an uplink transmission resource for a terminal to feed back CSI. However, since the base station does not know how many data streams need to be transmitted by the terminal and the specific number of bits to be transmitted for each data stream when allocating resources or since multiple pieces of CSI may be transmitted over the same uplink transmission resource, the uplink transmission resource allocated by the base station may not be able to effectively transmit the CSI. In this case, one solution is to drop part of the bits of the CSI by the terminal to achieve the purpose of transmission. However, for AI-based CSI feedback, if part of the bits are dropped, the base station may fail to recover the compressed channel information. Another solution is to feed back the CSI through multiple CSI reports, but how to feed back the CSI through multiple CSI reports is a problem that needs to be solved.

### SUMMARY

The present application provides a CSI feedback method, a CSI receiving method, a CSI feedback apparatus, a CSI receiving apparatus, and a communication node which can effectively solve the problem that one uplink transmission resource cannot effectively transmit at least one piece of CSI.

In a first aspect, the embodiments of the present application provide a CSI feedback method. The method includes the following.

First CSI is split into at least two pieces of sub-CSI.

The at least two pieces of sub-CSI are fed back over at least two uplink transmission resources.

In a second aspect, the embodiments of the present application further provide a CSI receiving method. The method includes the following.

At least two pieces of sub-CSI are received over at least two uplink transmission resources.

The at least two pieces of sub-CSI are combined into first CSI.

In a third aspect, the embodiments of the present application further provide a CSI feedback apparatus. The apparatus includes a splitting module and a feedback module.

The splitting module is configured to split first CSI into at least two pieces of sub-CSI.

The feedback module is configured to feed back the at least two pieces of sub-CSI over at least two uplink transmission resources.

In a fourth aspect, the embodiments of the present application further provide a CSI receiving apparatus. The apparatus includes a receiving module and a combination module.

The receiving module is configured to receive at least two pieces of sub-CSI over at least two uplink transmission resources.

The combination module is configured to combine the at least two pieces of sub-CSI into first CSI.

In a fifth aspect, the embodiments of the present application provide a communication node. The communication node includes a storage apparatus.

The storage apparatus is configured to store one or more programs.

The one or more programs, when executed by one or more processors, cause the one or more processors to implement any method provided by the embodiments of the present application.

In a sixth aspect, the embodiments of the present application provide a storage medium. The storage medium is configured to store a computer program which, when executed by a processor, causes the processor to implement any method provided by the embodiments of the present application.

The preceding embodiments and other aspects of the present application and implementations thereof will be described in more detail in the brief description of drawings, detailed description, and claims.

### BRIEF DESCRIPTION OF DRAWINGS

FIG. 1 is a first flowchart of a CSI feedback method according to an embodiment of the present application;
FIG. 2 is a second flowchart of a CSI feedback method according to an embodiment of the present application;
FIG. 3 is a third flowchart of a CSI feedback method according to an embodiment of the present application;
FIG. 4 is a structure diagram of an uplink transmission resource according to an embodiment of the present application;
FIG. 5 is a flowchart of a CSI receiving method according to an embodiment of the present application;
FIG. 6 is a structure diagram of a CSI feedback apparatus according to an embodiment of the present application;
FIG. 7 is a structure diagram of a CSI receiving apparatus according to an embodiment of the present application; and
FIG. 8 is a structure diagram of a communication node according to an embodiment of the present application.

### DETAILED DESCRIPTION

The embodiments of the present application will be described below in conjunction with drawings.

The steps illustrated in the flowcharts among the drawings may be performed by, for example, a computer system capable of executing a set of computer-executable instructions. Moreover, although logical sequences are illustrated in the flowcharts, in some cases, the illustrated or described steps may be performed in sequences different from those described herein.

In the embodiments of the present application, the network architecture of a mobile communication network (including, but not limited to, a 3rd generation (3G) mobile communication network, a 4th generation (4G) mobile communication network, a 5th generation (5G) mobile communication network, and a future mobile communication network) may include a network-side device (for example, including, but not limited to, a base station) and a receiving-side device (for example, including, but not limited to, a terminal). It is to be understood that in the example herein, in downlink, a first communication node (which may also be referred to as a first communication node device) may be a base station, and a second communication node (which may also be referred to as a second communication node device) may be a terminal. Of course, in uplink, a first communication node may also be a terminal, and a second communication node may also be a base station. When two communication nodes perform device-to-device communication, both the first communication node and the second communication node may be base stations or terminals.

In the embodiments of the present application, the base station may be a base station or an evolutional Node B (eNB or eNodeB) in Long-Term Evolution (LTE) or Long Term Evolution-advanced (LTE-A), a base station device in a 5G network, a base station in a future communication system, or the like. The base station may include a variety of network-side devices such as a macro base station, a micro base station, a home base station, a radio remote, reconfigurable intelligent surfaces (RISs), a router, a wireless fidelity (Wi-Fi) device, a primary cells, and a secondary cell.

In the embodiments of the present application, the terminal is a device having a wireless transceiving function. The terminal may be deployed on land, including an indoor device, an outdoor device, a hand-held device, a wearable device, or a vehicle-mounted device. The terminal may also be deployed on the water (for example, on a ship). The terminal may also be deployed in the air (for example, on an airplane, a balloon, and a satellite). The terminal may be a mobile phone, a Pad, a computer having a wireless transceiving function, a virtual reality (VR) terminal, an augmented reality (AR) terminal, a wireless terminal for industrial control, a wireless terminal for self-driving, a wireless terminal for remote medical, a wireless terminal for smart grid, a wireless terminal for transportation safety, a wireless terminal for smart city, and a wireless terminal for smart home. The embodiments of the present application may involve a variety of application scenarios. The terminal may sometimes be referred to as a user, a user equipment (UE), an access terminal, a UE unit, a UE station, a mobile station, a mobile platform, a remote station, a remote terminal, a mobile device, a UE terminal, a wireless communication device, a UE agent or a UE apparatus.

In the embodiments of the present application, higher-layer signaling includes, but is not limited to, radio resource control (RRC) signaling and media access control-control element (MAC-CE) signaling. Physical-layer signaling may be transmitted between the base station and the terminal, such as physical-layer signaling transmitted over a physical downlink control channel (PDCCH) or physical-layer signaling transmitted over a physical uplink control channel (PUCCH).

In the embodiments of the present application, an indicator of a parameter may also be referred to as an index or an identifier (ID), and the three are completely equivalent concepts, for example, an ID of a wireless system resource. The wireless system resource herein includes, but is not limited to, one of the following: a reference signal resource, a reference signal resource group, a reference signal resource configuration, a CSI report, a CSI report set, a terminal, a base station, a panel, a neural network, a sub-neural network, and a neural network layer. The base station may indicate the ID of one resource or the IDs of a group of resources to the terminal through various higher-layer signaling or physical-layer signaling.

In the embodiments of the present application, the AI involves devices, components, software, and modules having a self-learning function such as ML, deep learning, reinforcement learning, transfer learning, deep reinforcement learning, and meta learning. In an embodiment, AI is implemented through an AI network (referred to as a neural network), and the neural network includes multiple layers, each of which includes at least one node. In an example, the neural network includes an input layer, an output layer, and at least one hidden layer, and each layer of the neural network includes, but is not limited to, at least one of a fully connected layer, a dense layer, a convolution layer, a transposed convolution layer, a directly connected layer, an activation function, a normalization layer, a pooling layer, and the like. In an embodiment, each layer of the neural network may include one sub-neural network, such as a residual network block (or ResNet block), a Densenet block, and a recurrent neural network (RNN). The AI network may include a neural network model and/or neural network parameters corresponding to the neural network model. The neural network model may be referred to as a network model, and the neural network parameters may be referred to as network parameters. One network model defines the number of layers of the neural network, the size of each layer, an activation function, a link situation, a convolution kernel, a convolution stride, the type of convolution (for example, one-dimensional (1D) convolution, two-dimensional (2D) convolution, three-dimensional (3D) convolution, atrous convolution, transposed convolution, separable convolution, group convolution, dilated convolution, and the like) and other network architectures, and the network parameters are the weights and/or offsets of layers of networks in the network model and the values thereof. One network model may correspond to multiple different sets of neural network parameter values to accommodate different scenarios. One neural network model may correspond to multiple different neural network parameter values. The parameters of the neural network are obtained by means of online training or offline training. For example, the neural network model is trained by using at least one sample and label inputted to obtain the neural network parameters.

In the embodiments of the present application, a slot may be a slot or a mini slot. One slot or one mini slot includes at least one symbol. The symbol herein refers to a time unit in one subframe, one frame, or one slot. For example, the symbol may be an orthogonal frequency-division multiplexing (OFDM) symbol, a single-carrier frequency-division multiple access (SC-FDMA) symbol, or an orthogonal frequency-division multiple access (OFDMA) symbol.

In the embodiments of the present application, transmission includes sending or receiving, for example, sending data or a signal or receiving data or a signal.

In the embodiments of the present application, to calculate the CSI or perform channel estimation, mobility management or positioning, the base station or the user needs to send a reference signal (RS). The reference signal includes, but is not limited to, a channel state information reference signal (CSI-RS) which includes a zero power CSI-RS (ZP CSI-RS) and a non-zero power CSI-RS (NZP CSI-RS), a channel state information-interference measurement (CSI-IM) signal, a sounding reference signal (SRS), a synchronization signals block (SSB), a physical broadcast channel (PBCH), and a synchronization signal block/physical broadcast channel (SSB/PBCH). The NZP CSI-RS may be used for measuring a channel or interference, the CSI-RS may also be used for tracking and thus is also called a CSI-RS for tracking (TRS), the CSI-IM is generally used for measuring interference, and the SRS is used for channel estimation or acquiring an uplink precode. In addition, the set of resource elements (REs) for transmitting the reference signal is referred to as a reference signal resource, such as a CSI-RS resource, an SRS resource, a CSI-IM resource, and an SSB resource. The SSB herein includes a synchronization signal block and/or a physical broadcast channel.

In the embodiments of the present application, in a communication system, the resource for transmitting the reference signal may be referred to as a reference signal resource. To save the signaling overhead, multiple reference signal resources may be combined into one set (such as a CSI-RS resource set, a CSI-IM resource set, and an SRS resource set). One reference signal resource set includes at least one reference signal resource. Multiple reference signal resource sets may have the same reference signal resource setting (for example, a CSI-RS resource setting, an SRS resource setting, and a CSI-IM resource setting, where the CSI-RS resource setting and the CSI-IM resource setting may be collectively referred to as the CSI-RS resource setting) to configure reference signal parameter information.

In the embodiments of the present application, the base station configures measurement resource information, and the measurement resource information is used for acquiring the CSI. The measurement resource information includes C_{N} pieces of channel measurement resource (CMR) information and C_{M} pieces of interference measurement resource (IMR) information, where C_{N} and C_{M} are positive integers. The base station configures the measurement resource information in one report configuration (report config) or one reporting setting. The C_{N} pieces of CMR information are used for performing measurement on a channel by the terminal, and the C_{M} pieces of IMR information are used for enabling the terminal to measure interference to which the terminal is subjected.

In an example, to better transmit the data or the signal, the base station or the terminal needs to acquire the CSI. The CSI may include at least one of a CSI-RS resource indicator (CRI), a synchronization signals block resource indicator (SSBRI), reference signal received power (RSRP), a differential RSRP, a channel quality indicator (CQI), a precoding matrix indicator (PMI), a layer indicator (LI), a rank indicator (RI), a Level 1 signal-to-interference-plus-noise ratio (L1-SINR), a differential L1-SINR, or precoding information. The precoding matrix indicator is one type of precoding information, that is, the case of implementing the precoding information based on a codebook. The precoding information is also implemented in a non-codebook-based manner, such as second-type precoding information. In an example, the CSI including first-type precoding information is referred to as first-type CSI. In an example, the CSI including second-type precoding information is referred to as second-type CSI.

In the embodiments of the present application, the terminal and the base station transmit CSI matching a channel through the first-type precoding information, and the first-type precoding information is precoding information formed based on a conventional channel feature matrix or based on a quantization value of a feature matrix, For example, the first-type precoding information is formed in a codebook-based manner, and the codebook is, for example, a codebook of N antennas in LTE, where N = 2, 4, 8, 12, 16, or 2432, or is a Type I codebook, a Type II codebook, a Type II port selection codebook, an enhanced Type II codebook, an enhanced Type II selection codebook or a further enhanced Type II selection codebook in New Radio (NR). The codebook herein includes L codewords, the idea of which is that the base station and the terminal pre-store L codewords according to a prescribed formula, table or dictionary. In an example, the codeword is one vector. In an example, the codeword is a matrix including r columns, and each column is also one vector. For example, the columns of the matrix are orthogonal to each other. In an example, the vector constituting the codeword is a 0-1 vector, where the entire vector has only one element with a value of 1, and the other values are 0. In an example, the vector constituting the codeword is a discrete Fourier transform (DFT) vector. In an example, the vector constituting the codeword is obtained by performing a tensor product (Kronecker product) operation on two or more DFT vectors. In an example, the vector constituting the codeword is obtained by multiplying two or more DFT vectors by different phase rotations and then connecting the two or more DFT vectors. In an example, the vector constituting the codeword is obtained by performing a tensor product (Kronecker product) operation and multiplication by phase rotations on two or more DFT vectors. The base station or the terminal, by looking up the L codewords, finds a codeword that best matches the channel as the optimal codeword to transmit the data or the signal. The codeword that best matches the channel herein includes, but is not limited to, at least one of the following: a codeword whose distance from the channel is the shortest, a codeword whose correlation with the channel is the highest, a codeword has the shortest distance from the optimal right singular vector or matrix the channel, a codeword has the closet correlation with the optimal right singular vector or matrix of the channel, or the codeword whose signal-to-noise ratio computed with the channel is the largest, where L is an integer greater than 1 and is generally greater than the number of transmit antennas.

In an example, the terminal and the base station transmit CSI matching a channel through the second-type precoding information, and the second-type precoding information is CSI obtained based on AI. In an example, the base station and the terminal obtain CSI through an autoencoder. The autoencoder includes one encoder and one decoder. The encoder is provided on a terminal side while the decoder is provided on a base station side. The terminal compresses an obtained channel H through the encoder to obtain a compressed channel H1, quantizes the compressed channel H1, and feeds back the quantized channel H1 to the base station. The base station receives the quantized channel H1, de-quantizes the channel H1, and inputs the de-quantized channel H1 into the decoder. The decoder decompresses the de-quantized channel H1 to recover H.

In an example, H includes K0 elements. The terminal selects K elements from H as H1, quantizes H1, and feeds back the quantized H1. The base station receives the K quantized elements, de-quantizes the K quantized elements, and inputs the de-quantized K elements into an AI module. The AI module outputs K0 elements as the recovery of H to obtain a precoding matrix of H, where K and K0 are integers greater than 1, and K < K0. The H1 processed by a compressor or the K elements selected from H is second-type CSI. For simplicity, the quantized H1 is also referred to as the second-type CSI. In an example, the second-type precoding information may also be a precoding matrix that is generated in other non-AI manners and is different from the first-type precoding information. In an example, the second-type precoding information may also be a precoding matrix other than the first-type precoding information.

In an example, to transmit CSI, for example, when the terminal feeds back the CSI, the base station receives the CSI, and the terminal and the base station need to define one CSI report (or one CSI report config). The CSI report defines at least one of the following parameters: a time-frequency resource for feeding back the CSI, report Quantity included in the CSI, a time domain type reportConfigType of CSI feedback, a measurement channel resource, a measurement interference resource, or a measured bandwidth size. The CSI report may be transmitted over an uplink transmission resource. The uplink transmission resource includes a physical uplink shared channel (PUSCH) and a PUCCH. The CSI report also has a time-domain characteristic and includes a periodic CSI report (P-CSI report), an aperiodic CSI report (AP-CSI report), and a semi-persistent CSI report (SP-CSI report). Generally, the number of bits for transmitting the P-CSI is relatively small, and the P-CSI is transmitted over the PUCCH; the number of bits for transmitting the A-CSI is relatively large, and the A-CSI is generally transmitted over the PUSCH; the SP-CSI may be transmitted over the PUSCH or the PUCCH. The P-CSI transmitted based on the PUCCH is generally configured through higher-layer signaling (for example, an RRC); the SP-CSI transmitted based on the PUCCH is also configured or activated through higher-layer signaling (for example, an RRC and/or a MAC CE); the SP-CSI or the A-CSI transmitted based on the PUSCH is triggered through physical-layer signaling (for example, downlink control information (DCI)), where the DCI is generally transmitted over a PDCCH. In the embodiments of the present application, feeding back CSI may also be referred to as transmitting CSI or sending CSI. For example, the CSI is carried on an uplink transmission resource for feedback or transmission. Both the uplink transmission resource and the corresponding CSI are indicated by one CSI report. In the embodiments of the present application, feeding back one CSI report refers to feeding back the CSI corresponding to the CSI report.

In the embodiments of the present application, the base station configures N CSI reports for the terminal through higher-layer signaling and/or physical-layer signaling. Each CSI report has an identity (ID) which is referred to as a CSI report ID. The terminal may select M CSI reports from the N CSI reports according to the calculation capability or the processing capability of the terminal and the requirements of the base station, and feed back CSI corresponding to at least one CSI report among the M CSI reports according to an uplink feedback resource, where N and M are positive integers, and M ≤ N. In an example, the terminal needs to feed back M CSI reports, but the transmission resources corresponding to at least two of the M reports are in conflict. The conflict between the transmission resources corresponding to two reports means that at least one symbol and/or at least one subcarrier in the transmission resources (for example, PUCCHs or PUSCHs) used for feeding back the two reports is identical to each other.

In an example, the terminal compresses an obtained channel H through the encoder and feeds back the compressed channel H1 to the base station. The base station receives the compressed channel H1 and decompresses the channel H1 through a decompression module of the decoder to recover H. For example, the terminal compresses obtained channel information H through the encoder to obtain first CSI (which is second-type precoding information herein), where the first CSI includes L elements, the L elements are quantized to obtain quantized the first CSI, and the quantized first CSI is fed back to the base station. The base station receives the quantized first CSI, de-quantizes the quantized first CSI, inputs the de-quantized first CSI into the decoder to process the first CSI, and obtains second CSI. The second CSI may be understood as an estimated value of the channel information H or a precoding matrix matching the channel information H.

In some examples, the terminal needs to feed back multiple CSI reports over the same uplink transmission resource, where the transmission resources corresponding to at least L CSI reports among the multiple CSI reports are in conflict. In an example, at least one of the L CSI reports that are in conflict is a report containing second-type precoding information, where L is a positive integer. The priority values (PVs) of the L CSI reports that are in conflict are calculated according to a priority value calculation formula. According to the priority values sorted from smallest to largest, a CSI report with the largest PV is ignored first, and a CSI report with the second largest PV is then ignored until the transmission requirement is satisfied. L1 CSI reports that have the smallest PVs and satisfy the transmission requirement are transmitted over the uplink transmission resources, where L and L1 are positive integers, and L ≥ L1. In an example, the uplink transmission resource is a PUSCH. In an example, the uplink transmission resource is a PUCCH.

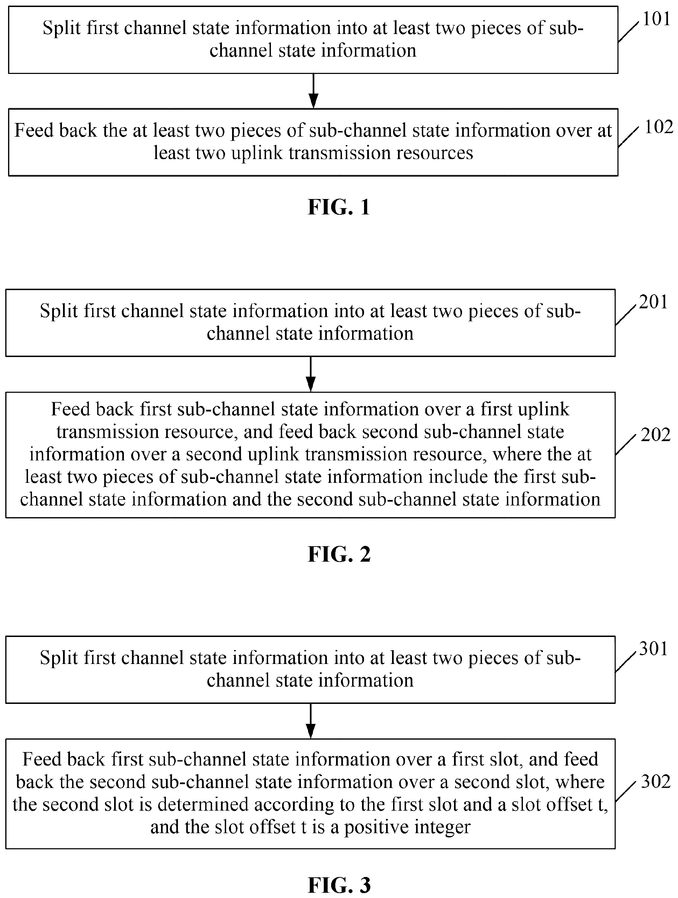

FIG. 1 is a first flowchart of a CSI feedback method according to an embodiment of the present application. The method may be executed by a CSI feedback apparatus or a terminal. The apparatus or the terminal may be implemented by software and/or hardware and may be integrated into any intelligent device having a network communication function. As shown in FIG. 1, the CSI feedback method may include S101 and S102 described below.

In S101, first CSI is split into at least two pieces of sub-CSI.

In an example, when a terminal needs to feed back L CSI reports that are in conflict to a base station over a first uplink transmission resource, the terminal selects L1 CSI reports from the L CSI reports as the CSI reports prioritized to be transmitted according to priorities, where L and L1 are positive integers and L is greater than or equal to L1. An L1^{th} CSI report is the CSI report with the smallest priority among the L1 CSI reports prioritized to be transmitted. In a case, the first uplink transmission resource for transmitting the L1 CSI reports may only transmit the contents of (L1 - 1) CSI reports and part of the content of the L1^{th} CSI report. The CSI corresponding to the L1^{th} CSI report is split into C pieces of sub-CSI (referred to as a CSI sub-set), such as C pieces of sub-second-type precoding information. At least one piece of sub-CSI among the C pieces of sub-CSI is transmitted over a first uplink transmission resource, and at least one piece of sub-CSI among the C pieces of sub-CSI is transmitted over a second uplink transmission resource.

In an example, the intersection of the sub-CSI transmitted over the first uplink transmission resource and the sub-CSI transmitted over the second uplink transmission resource is zero or the sub-CSI transmitted over the first uplink transmission resource and the sub-CSI transmitted over the second uplink transmission resource are different from each other.

In an example, the union of the sub-CSI transmitted over the first uplink transmission resource and the sub-CSI transmitted over the second uplink transmission resource is all the sub-CSI.

In an example, the CSI (that is, the first CSI) corresponding to the L1^{th} CSI report is split into two pieces of sub-CSI. The first sub-CSI is transmitted over the first uplink transmission resource, and the second sub-CSI is transmitted over the second uplink transmission resource. In an example, the CSI corresponding to the L1^{th} CSI report is split into C pieces of sub-CSI, and an i^{th} sub-CSI is transmitted over an i^{th} uplink transmission resource, where i = 1, ..., C.

In an embodiment, the CSI corresponding to at least one CSI report is split into C pieces of sub-CSI, and all or part of the C pieces of sub-CSI are transmitted over at least two uplink transmission resources. For example, at least one piece of sub-CSI among the C pieces of sub-CSI is transmitted over the first uplink transmission resource, and the remaining pieces of sub-CSI among the C pieces of sub-CSI are transmitted over the second uplink transmission resource. The multiple uplink transmission resources satisfy a preset timing relation, and the transmission content on an uplink transmission resource is determined according to the preset timing relation.

In S102, the at least two pieces of sub-CSI are fed back over at least two uplink transmission resources.

In an embodiment, the terminal may feed back at least two pieces of sub-CSI over at least two uplink transmission resources. For example, assuming that the terminal splits the first CSI into first sub-CSI and second sub-CSI, the terminal may feed back the first sub-CSI over a first uplink transmission resource and feed back the second sub-CSI over a second uplink transmission resource.

In an embodiment, the CSI corresponding to the L1^{th} CSI report is the first CSI and includes K bits. However, the first uplink transmission resource transmits the contents of (L1 - 1) CSI reports and part of the content of the L1^{th} CSI report (only K1 bits are left for transmitting part of the content of the L1^{th} CSI report). The terminal splits the first CSI into first sub-CSI and second sub-CSI, the first sub-CSI of K1 bits may be carried on the first uplink transmission resource for feedback, and the remaining second sub-CSI of K2 (K2 = K - K1) bits may be carried on the second uplink transmission resource for feedback. In an embodiment, the terminal may also split the CSI corresponding to the L1^{th} CSI report into C pieces of sub-CSI. The first sub-CSI is transmitted over the first uplink transmission resource, the second sub-CSI is transmitted over the second uplink transmission resource, ..., and C^{th} sub-CSI is transmitted over a C^{th} uplink transmission resource.

In an embodiment, the C uplink transmission resources corresponding to the C pieces of sub-CSI correspond to different time-domain resources, for example, in multiple different slots or sub-slots. In an embodiment, the C uplink transmission resources corresponding to the C pieces of sub-CSI correspond to different frequency-domain resources, for example, in different subcarrier sets or different physical resource blocks (PBRs).

In an embodiment, the first uplink transmission resource and the first sub-CSI correspond to a first CSI report, and the second uplink transmission resource and the second sub-CSI correspond to a second CSI report. The first uplink transmission resource and the first sub-CSI corresponding to the first CSI report means that the first uplink transmission resource is an uplink transmission resource indicated by the first CSI report, and the first sub-CSI is CSI indicated by the first CSI report and is transmitted over the first uplink transmission resource indicated by the first CSI report. The second uplink transmission resource and the second sub-CSI corresponding to the second CSI report means that the second uplink transmission resource is an uplink transmission resource indicated by the second CSI report, and the second sub-CSI is CSI indicated by the second CSI report and is transmitted over the second uplink transmission resource indicated by the second CSI report.

In an embodiment, the terminal may feed back the first sub-CSI over the first uplink transmission resource and feed back the second sub-CSI over the second uplink transmission resource. For example, the terminal may feed back the first sub-CSI over a first slot and feed back the second sub-CSI over a second slot, where the second slot is larger than the first slot. The slot herein may also be a sub-slot.

In an embodiment, the second slot is determined according to the first slot and a slot offset t. For example, the second slot is equal to the first slot plus the slot offset. In an embodiment, the slot offset t is determined according to the second slot and the first slot. For example, the slot offset is equal to the second slot minus the first slot. The slot offset t herein is a positive integer. In an embodiment, the first slot is determined according to the second slot and the slot offset t. For example, the first slot is equal to the second slot minus the slot offset. The slot offset t herein is a positive integer.

In an embodiment, the slot offset t is an integer greater than or equal to a first threshold m1 and less than or equal to a second threshold m2, where m1 and m2 are positive integers, and m1 is less than m2. For example, the terminal may feed back the first sub-CSI over an n^{th} slot and feed back the second sub-CSI over an (n + t)^{th} slot, where n is an integer, t is an integer greater than or equal to m1 and less than or equal to m2, and m1 and m2 are positive integers.

In the CSI feedback method provided by the embodiments of the present application, the terminal first splits first CSI into at least two pieces of sub-CSI and transmits the at least two pieces of sub-CSI over at least two uplink transmission resources. In this manner, the base station may receive the at least two pieces of sub-CSI fed back by the terminal over at least two uplink transmission resources, and thus, channel decoding may not be affected. In the related art, the terminal may drop part of the bits of the CSI to achieve the purpose of transmission. However, for AI-based CSI, each CSI coded bit may be related to channel information and is equally important. If part of the bits are dropped, the base station may not be able to recover the compressed channel, as a result, the decoder fails to perform decoding well. Therefore, compared with the related art, the CSI feedback method provided by the embodiments of the present application can effectively solve the problem that one uplink transmission resource cannot effectively transmit at least one piece of CSI. The solution of the embodiments of the present application is simple and convenient to implement, is easy to popularize, and has a wider application range.

FIG. 2 is a second flowchart of a CSI feedback method according to an embodiment of the present application. The embodiment is optimized and extended on the basis of the solution described above and can be combined with the optional implementations described above. As shown in FIG. 2, the CSI feedback method may include S201 and S202 described below.

In S201, first CSI is split into at least two pieces of sub-CSI.

In S202, first sub-CSI is fed back over a first uplink transmission resource, and second sub-CSI is fed back over a second uplink transmission resource, where the at least two pieces of sub-CSI include the first sub-CSI and the second sub-CSI.

In an embodiment, the terminal may split the first CSI into two or more pieces of sub-CSI. When the terminal splits the first CSI into two pieces of sub-CSI, the terminal may feed back the first sub-CSI over the first uplink transmission resource and feed back the second sub-CSI over the second uplink transmission resource.

In an embodiment, when C = 2, that is, the first CSI corresponding to one CSI report is split into first sub-CSI and second sub-CSI, the first CSI may include K bits, the first sub-CSI may include K1 bits, and the second sub-CSI may include K2 bits, where K1 + K2 ≥ K. The reason why a sum of K1 and K2 is greater than or equal to K herein is that a first CSI report and/or a second CSI report may include some bits indicating that the first CSI report and/or the second CSI report belong to the same CSI or some bits indicating an association between the first CSI report and the second CSI report may exist.

In the CSI feedback method provided by the embodiments of the present application, the terminal first splits first CSI into at least two pieces of sub-CSI and transmits the at least two pieces of sub-CSI over at least two uplink transmission resources. In this manner, the base station may receive the at least two pieces of sub-CSI fed back by the terminal over at least two uplink transmission resources, and thus, channel decoding will not be affected. In the related art, the terminal may drop part of the bits of the CSI to achieve the purpose of transmission. However, for AI-based CSI, each CSI coded bit may be related to channel information and is equally important. If part of the bits are dropped, the base station may not be able to recover the compressed channel, as a result, the decoder fails to perform decoding well. Therefore, compared with the related art, the CSI feedback method provided by the embodiments of the present application can effectively solve the problem that one uplink transmission resource cannot effectively transmit at least one piece of CSI. The solution of the embodiments of the present application is simple and convenient to implement, is easy to popularize, and has a wider application range.

FIG. 3 is a third flowchart of a CSI feedback method according to an embodiment of the present application. The embodiment is optimized and extended on the basis of the solutions described above and can be combined with the optional implementations described above. As shown in FIG. 3, the CSI feedback method may include S301 and S302 described below.

In S301, first CSI is split into at least two pieces of sub-CSI.

In S302, first sub-CSI is fed back over a first slot, and the second sub-CSI is fed back over a second slot, where the second slot is larger than the first slot.

In an embodiment, the terminal may feed back the first sub-CSI over the first slot and feed back the second sub-CSI over the second slot, where the second slot is larger than the first slot. The second slot is determined according to the first slot and a slot offset t; or the slot offset t is determined according to the second slot and the first slot; or the first time slot is determined according to the second slot and the slot offset t; where the slot offset t is a positive integer.

In an embodiment, the slot offset t is an integer greater than or equal to a first threshold m1 and less than or equal to a second threshold m2, where m1 and m2 are positive integers, and m1 is less than m2. For example, the terminal may feed back the first sub-CSI over an n^{th} slot and feed back the second sub-CSI over an (n + t)^{th} slot, where n is an integer, t is an integer greater than or equal to m1 and less than or equal to m2, and m1 and m2 are positive integers.

In an embodiment, the manner of determining the first threshold m1 includes one of the following: the first threshold m1 is determined according to received first indication signaling; the first threshold m1 is determined according to an agreed manner; the first threshold m1 is determined according to a first time interval f1 and a carrier spacing; or the first threshold m1 is determined according to the capability to process CSI; where the first indication signaling may include first higher-layer signaling and/or first physical-layer signaling. For example, the first threshold m1 may be determined by the base station. The terminal receives the first higher-layer signaling and/or the first physical-layer signaling sent by the base station and determines m1 through the first higher-layer signaling and/or the first physical-layer signaling. Alternatively, the first threshold m1 may also be determined by the base station and the terminal according to an agreed manner. Alternatively, m1 may also be determined according to the first time interval f1 and the carrier spacing, where f1 is the number of symbols between the last symbol of the first uplink transmission resource carrying the first CSI report and the first symbol of the second uplink transmission resource carrying the second CSI report, and f1 is the minimum time for the base station to process the CSI report. Alternatively, the first threshold m1 may also be determined according to the capability of the terminal to process CSI. The terminal feeds back its capability to process CSI to the base station, and the base station determines m1 according to the capability of the terminal to process CSI.

In an embodiment, the manner of determining the second threshold m2 includes one of the following: the second threshold m2 is determined according to received second indication signaling; the second threshold m2 is determined according to an agreed manner; the second threshold m2 is determined according to a second time interval f2 and a carrier spacing; or the second threshold m2 is determined according to the capability to process CSI; where the second indication signaling may include second higher-layer signaling and/or second physical-layer signaling. For example, the second threshold m2 may be determined by the base station. The terminal receives the second higher-layer signaling and/or the second physical-layer signaling sent by the base station and may determine m2 through the second higher-layer signaling and/or the second physical-layer signaling. Alternatively, the second threshold m2 may also be determined by the base station and the terminal according to an agreed manner. Alternatively, the second threshold m2 may also be determined according to the second time interval f2 and the carrier spacing, where f2 is the number of symbols between the last symbol of the first uplink transmission resource carrying the first CSI report and the first symbol of the second uplink transmission resource carrying the second CSI report, and f2 is the maximum time required for the channel to retain relevant requirements. Alternatively, the second threshold m2 may also be determined according to the capability of the terminal to process CSI. The terminal feeds back its capability to process CSI to the base station, and the base station determines m2 according to the capability of the terminal to process CSI.

In an embodiment, the slot offset t is less than the first threshold m1, that is, 1 ≤ t < m1, and a hybrid automatic repeat request (HARQ) corresponding to the first CSI report corresponding to the first sub-CSI and a HARQ corresponding to the second CSI report corresponding to the second sub-CSI have the same HARQ ID.

In an embodiment, the slot offset t is greater than the first threshold m1, that is, the HARQ corresponding to the first CSI report and the HARQ corresponding to the second CSI report have the same HARQ ID; or the HARQ corresponding to the first CSI report and the HARQ corresponding to the second CSI report have different HARQ IDs.

In an embodiment, the slot offset t is greater than the second threshold m2, that is, the terminal may ignore the second CSI report corresponding to the second sub-CSI. That is, the second CSI report corresponding to the second sub-CSI is not fed back over the second uplink transmission resource.

In an example, the slot offset t is greater than or equal to the second threshold m2, that is, t ≥ m2, and the terminal may further receive third indication signaling, re-acquire the first CSI that is second-type precoding information, and feed back the first CSI, where the third indication signaling is higher-layer signaling and/or physical-layer signaling. In an example, the terminal may further receive fourth indication signaling, re-acquire the first CSI that is first-type precoding information, and feed back the first CSI, where the fourth indication signaling is higher-layer signaling and/or physical-layer signaling. In an example, the terminal may further receive fifth indication signaling, re-acquire the first sub-CSI and the second sub-CSI, and feed back the first sub-CSI and the second sub-CSI, where the fifth indication signaling is higher-layer signaling and/or physical-layer signaling. In an example, the terminal may further receive sixth indication signaling, re-acquire the first sub-CSI, and feed back the first sub-CSI, where the sixth indication signaling is higher-layer signaling and/or physical-layer signaling. In an example, the terminal may further receive seventh indication signaling, re-acquire the second sub-CSI, and feed back the second sub-CSI, where the seventh indication signaling is higher-layer signaling and/or physical-layer signaling.

In an embodiment, the second uplink transmission resource may be a PUSCH, and the number of effective transmitted bits of the second uplink transmission resource is greater than the number of bits corresponding to the second sub-CSI.

In an embodiment, the second uplink transmission resource may be a PUCCH, and the number of effective transmitted bits of the second uplink transmission resource is more than the number of reserved bits corresponding to the second sub-CSI.

In some embodiments, the number of effective transmitted bits of one uplink transmission resource refers to the number of transmitted bits that the uplink transmission resource can carry under its corresponding modulation and coding scheme.

In an embodiment, the second uplink transmission resource may be a PUCCH, and the PUCCH is used for transmitting second CSI. The second CSI herein is different from the first CSI, and the transmission priority of the second CSI is reduced to transmit the second sub-CSI.

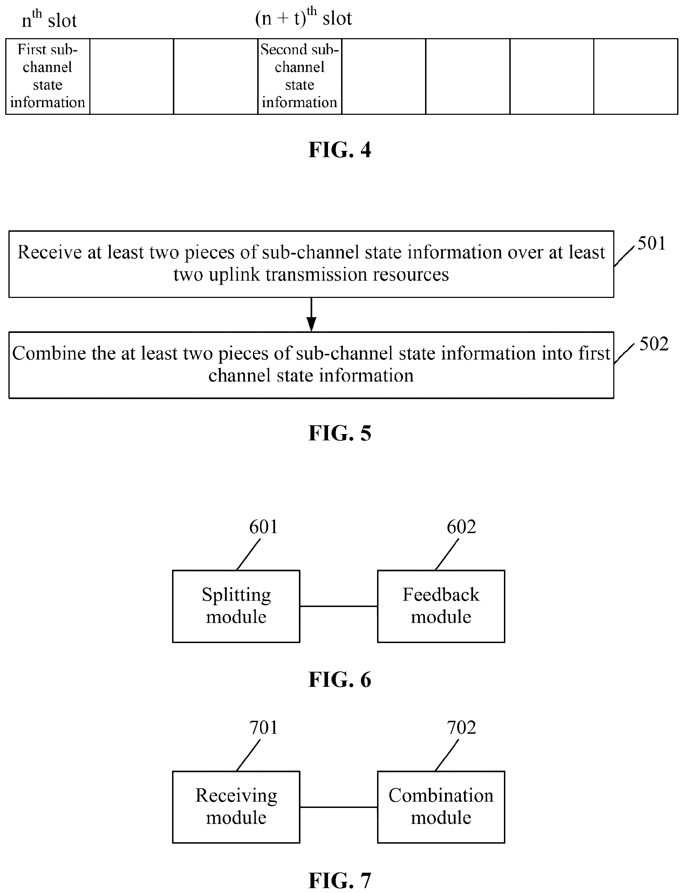

FIG. 4 is a structure diagram of an uplink transmission resource according to an embodiment of the present application. As shown in FIG. 4, the terminal may feed back the first sub-CSI over an n^{th} slot and feed back the second sub-CSI over an (n + t)^{th} slot, where n is an integer, t is a positive integer, and n is a negative integer in the current slot and is a positive integer after the current slot. In an example, since the base station needs a certain time to process the received CSI1 after reception of CSI1, t is required to be greater than or equal to m1, where m1 is related to an algorithm used by the base station to process CSI1 or the processing capability of the base station itself and is also related to the number of CSI that the base station needs to process simultaneously. In an example, the first threshold m1 may be determined by the base station. The base station sends m1 to the terminal through first higher-layer signaling and/or first physical-layer signaling, and the terminal determines m1 by receiving the first higher-layer signaling and/or the first physical-layer signaling. In an example, the first threshold m1 is agreed on by the base station and the terminal. For example, the first threshold m1 is different depending on the processing capability of the base station or the processing capability of the terminal. In an example, the first threshold m1 is the minimum value agreed on by the base station and the terminal. For example, the base station and the terminal agree that when the number of symbols between the last symbol of the first uplink transmission resource carrying the first CSI report and the first symbol of the second uplink transmission resource carrying the second CSI report is f1, then m1 is floor(f1/s), where f1 is a positive integer, s is the number of symbols included in each slot, such as 12 and 14, and floor represents a rounding function, such as a ceiling function or a floor function. In an example, the first threshold m1 is determined according to f1 and the carrier spacing. For example, the first threshold m1 is 2^{(u1/u2)} × floor(f1/s), where f1 is a positive integer, s is the number of symbols included in each slot, u1 is a parameter related to the subcarrier spacing corresponding to the first uplink transmission resource or the second uplink transmission resource, for example, 30 kilohertz (kHz), and u2 corresponds to a reference subcarrier spacing, such as 15 kHz. In an example, the first threshold m1 is related to the capability of the terminal to process CSI. If m1 is too small, the terminal has no time to obtain the CSI, so the first threshold m1 must be greater than a certain value. The first threshold m1 may also be determined according to the capability of the terminal to process CSI. The terminal feeds back its capability to process CSI to the base station, and the base station determines the value of m1 according to the capability of the terminal to process CSI.

In an embodiment, since the channel is constantly changing, the CSI has a certain timeliness, and it is no longer meaningful for the terminal to feed back the CSI after the CSI passes a certain timeliness. Therefore, the slot offset t is required to be less than or equal to the second threshold m2. In an example, m2 is a positive integer, and the second threshold m2 may be determined according to the capability of the terminal to process CSI. In an example, the terminal may determine the value of m2 according to the change of a downlink channel. For example, when the channel changes fast, the value of m2 is small, and when the channel changes slow, the value of m2 is large. The change speed of the channel is related to the moving speed of the terminal, a surrounding scatterer, and the subcarrier spacing. In an example, the base station determines m2, for example, according to the change speed of the channel or a statistical characteristic of the channel, and indicates the determined m2 to the terminal through second higher-layer signaling and/or second physical-layer signaling. In an example, m2 is the maximum value agreed on by the base station and the terminal. For example, the base station and the terminal agree that when the number of symbols between the last symbol of the first uplink transmission resource carrying the first CSI report and the first symbol of the second uplink transmission resource carrying the second CSI report is f2, then m2 is floor(f1/s), where f2 is a positive integer, s is the number of symbols included in each slot, such as 12 and 14, and floor represents a rounding function, such as a ceiling function or a floor function. In an example, the first threshold m2 is determined according to the second time interval f2 and the carrier spacing. For example, the second threshold m2 is 2^{(u1/u2)} × floor(f1/s), where f2 is a positive integer, s is the number of symbols included in each slot, u1 is a parameter related to the subcarrier spacing corresponding to the first uplink transmission resource or the second uplink transmission resource, for example, 30 kHz, and u2 corresponds to a reference subcarrier spacing, such as 15 kHz.

In an embodiment, the slot offset t is less than the first threshold m1, that is, 1 ≤ t < m1, and the terminal may not process or transmit the second sub-CSI. In an embodiment, if 1 ≤ t < m1, the terminal may acquire the second sub-CSI and transmit the second sub-CSI over the second uplink transmission resource, where the HARQ corresponding to the first CSI report corresponding to the first sub-CSI and the HARQ corresponding to the second CSI report corresponding to the second sub-CSI have the same HARQ ID, that is, the first sub-CSI and the second sub-CSI are re-transmitted over the same uplink transmission resource. In an example, the slot offset t is greater than or equal to the first threshold m1, that is, t ≥ m1, and the terminal may acquire the second CSI and transmit the second CSI over the second uplink transmission resource.

In an example, the slot offset t is greater than or equal to the second threshold m2, that is, t ≥ m2, and the terminal may not feed back the second sub-CSI. In an example, t ≥ m2, and the terminal may feed back the second sub-CSI over the second uplink transmission resource. However, after the base station receives the second sub-CSI, the base station finds that t ≥ m2, and the base station may not process the second sub-CSI. In an example, after the base station receives the second sub-CSI, the base station finds that t ≥ m2, then does not process the second sub-CSI, and ignores the first sub-CSI that has already been processed. In an example, after the base station receives the second sub-CSI, the base station finds that t ≥ m2, then does not process the second sub-CSI, and obtains low-precision CSI corresponding to the terminal through the first sub-CSI.

In an example, after the base station receives the second sub-CSI, the base station finds that t ≥ m2, then sends third indication signaling to the terminal for instructing the terminal to re-acquire the first CSI that is second-type precoding information, and receives the first CSI, where the third indication signaling is higher-layer signaling and/or physical-layer signaling.

In an example, after the base station receives the second sub-CSI, the base station finds that t ≥ m2, then sends fourth indication signaling to the terminal for instructing the terminal to re-acquire the first CSI that is first-type precoding information, and receives the first CSI, where the fourth indication signaling is higher-layer signaling and/or physical-layer signaling.

In an example, after the base station receives the second sub-CSI, the base station finds that t ≥ m2, then sends fifth indication signaling to the terminal for instructing the terminal to re-acquire the first sub-CSI and the second sub-CSI, and receives the first sub-CSI and the second sub-CSI, where the fifth indication signaling is higher-layer signaling and/or physical-layer signaling.

In an example, after the base station receives the second sub-CSI, the base station finds that t ≥ m2, then sends sixth indication signaling to the terminal for instructing the terminal to re-acquire the first sub-CSI, and receives the first sub-CSI, where the sixth indication signaling is higher-layer signaling and/or physical-layer signaling.

In an example, after the base station receives the second sub-CSI, the base station finds that t ≥ m2, then sends seventh indication signaling to the terminal for instructing the terminal to re-acquire the second sub-CSI, and receives the second sub-CSI, where the seventh indication signaling is higher-layer signaling and/or physical-layer signaling.

FIG. 5 is a flowchart of a CSI receiving method according to an embodiment of the present application. The method may be executed by a CSI receiving apparatus or a base station. The apparatus or the base station may be implemented by software and/or hardware and may be integrated into any intelligent device having a network communication function. As shown in FIG. 5, the CSI receiving method may include S501 and S502 described below.

In S501, at least two pieces of sub-CSI are received over at least two uplink transmission resources.

In S502, the at least two pieces of sub-CSI are combined into first CSI.

In an example, the intersection of the sub-CSI transmitted over the first uplink transmission resource and the sub-CSI transmitted over the second uplink transmission resource is zero, or the sub-CSI transmitted over the first uplink transmission resource and the sub-CSI transmitted over the second uplink transmission resource are different from each other.

In an example, the union of the sub-CSI transmitted over the first uplink transmission resource and the sub-CSI transmitted over the second uplink transmission resource is all the sub-CSI.

In an embodiment, the base station may receive first sub-CSI over a first uplink transmission resource and receive second sub-CSI over a second uplink transmission resource, where the at least two pieces of sub-CSI include the first sub-CSI and the second sub-CSI.

In an embodiment, the first uplink transmission resource and the first sub-CSI correspond to a first CSI report, and the second uplink transmission resource and the second sub-CSI correspond to a second CSI report.

For example, the base station may receive the first sub-CSI over a first slot and receive the second sub-CSI over a second slot, where the second slot is larger than the first slot. The slot herein may also be a sub-slot.

In an embodiment, the second slot is determined according to the first slot and a slot offset t. For example, the second slot is equal to the first slot plus the slot offset. The slot offset t herein is a positive integer.

In an embodiment, the slot offset t is determined according to the second slot and the first slot. For example, the slot offset is equal to the second slot minus the first slot. The slot offset t herein is a positive integer.

In an embodiment, the first slot is determined according to the second slot and the slot offset t. For example, the first slot is equal to the second slot minus the slot offset. The slot offset t herein is a positive integer.

For example, the base station may receive the first sub-CSI over an n^{th} slot and receive the second sub-CSI over an (n + t)^{th} slot, where n is an integer, t is an integer greater than or equal to m1 and less than or equal to m2, and m1 and m2 are positive integers.

In an embodiment, the slot offset t is an integer greater than or equal to a first threshold m1 and less than or equal to a second threshold m2, where m1 and m2 are positive integers, and m1 is less than m2.

In an embodiment, the manner of determining the first threshold m1 includes one of the following: the first threshold m1 is determined according to sent first indication signaling; the first threshold m1 is determined according to an agreed manner; the first threshold m1 is determined according to a first time interval f1 and a carrier spacing; or the first threshold m1 is determined according to the capability of the terminal to process CSI.

In an embodiment, the manner of determining the second threshold m2 includes one of the following: the second threshold m2 is determined according to sent second indication signaling; the second threshold m2 is determined according to an agreed manner; the second threshold m2 is determined according to a second time interval f2 and a carrier spacing; or the second threshold m2 is determined according to the capability of the terminal to process CSI.

In an embodiment, the slot offset t is less than the first threshold m1, and the HARQ corresponding to the first CSI report and the HARQ corresponding to the second CSI report have the same HARQ ID.

In an embodiment, the slot offset t is greater than or equal to the first threshold m1, and the HARQ corresponding to the first CSI report and the HARQ corresponding to the second CSI report have the same HARQ ID; or the HARQ corresponding to the first CSI report and the HARQ corresponding to the second CSI report have different HARQ IDs.

In an example, the slot offset t is greater than or equal to the second threshold m2, and the base station may further send third indication signaling for instructing the terminal to re-acquire the first CSI that is second-type precoding information, and then receive the first CSI, where the third indication signaling is higher-layer signaling and/or physical-layer signaling.

In an example, the slot offset t is greater than or equal to the second threshold m2, and the base station may further send fourth indication signaling for instructing the terminal to re-acquire the first CSI that is first-type precoding information, and then receive the first CSI, where the fourth indication signaling is higher-layer signaling and/or physical-layer signaling.

In an example, the slot offset t is greater than or equal to the second threshold m2, and the base station may further send fifth indication signaling for instructing the terminal to re-acquire the first sub-CSI and the second sub-CSI, and then receive the first sub-CSI and the second sub-CSI, where the fifth indication signaling is higher-layer signaling and/or physical-layer signaling.

In an example, the slot offset t is greater than or equal to the second threshold m2, and the base station may further send sixth indication signaling for instructing the terminal to re-acquire the first sub-CSI, and then receive the first sub-CSI, where the sixth indication signaling is higher-layer signaling and/or physical-layer signaling.

In an example, the slot offset t is greater than or equal to the second threshold m2, and the base station may further send seventh indication signaling for instructing the terminal to re-acquire the second sub-CSI, and then receive the second sub-CSI, where the seventh indication signaling is higher-layer signaling and/or physical-layer signaling.

In an embodiment, the second uplink transmission resource is a PUSCH, and the number of effective transmitted bits of the second uplink transmission resource is greater than the number of bits corresponding to the second sub-CSI.

In an embodiment, the second uplink transmission resource is a PUCCH, and the number of effective transmitted bits of the second uplink transmission resource is greater than the number of bits corresponding to the second sub-CSI.

In an embodiment, the second uplink transmission resource is a PUCCH, and the PUCCH is configured to transmit a reserved bit of a static HARQ codebook.

In some embodiments, the number of effective transmitted bits of one uplink transmission resource refers to the number of transmitted bits that the uplink transmission resource can carry under its corresponding modulation and coding scheme.

In an embodiment, the second uplink transmission resource may be a PUCCH, and the PUCCH is used for transmitting second CSI. The second CSI herein is different from the first CSI, and the transmission priority of the second CSI is reduced to transmit the second sub-CSI.

In the CSI receiving method provided by the embodiments of the present application, the base station receives at least two pieces of sub-CSI over at least two uplink transmission resources and combines the at least two pieces of sub-CSI into first CSI. In the related art, the terminal may drop part of the bits of the CSI to achieve the purpose of transmission. However, for AI-based CSI, each CSI coded bit may be related to channel information and is equally important. If part of the bits are dropped, the base station may not be able to recover the compressed channel, as a result, the decoder fails to perform decoding well. Therefore, compared with the related art, the CSI receiving method provided by the embodiments of the present application can effectively solve the problem that one uplink transmission resource cannot effectively transmit at least one piece of CSI. The solution of the embodiments of the present application is simple and convenient to implement, is easy to popularize, and has a wider application range.

FIG. 6 is a structure diagram of a CSI feedback apparatus according to an embodiment of the present application. As shown in FIG. 6, the CSI feedback apparatus includes a splitting module 601 and a feedback module 602. The splitting module 601 is configured to split first CSI into at least two pieces of sub-CSI. The feedback module 602 is configured to feed back the at least two pieces of sub-CSI over at least two uplink transmission resources.

In an embodiment, the feedback module 602 is configured to feed back first sub-CSI over a first uplink transmission resource and feed back second sub-CSI over a second uplink transmission resource, where the at least two pieces of sub-CSI include the first sub-CSI and the second sub-CSI.

In an embodiment, the first uplink transmission resource and the first sub-CSI correspond to a first CSI report, and the second uplink transmission resource and the second sub-CSI correspond to a second CSI report.

In an embodiment, the feedback module 602 is configured to feed back the first sub-CSI over a first slot and feed back the second sub-CSI over a second slot, where the second slot is larger than the first slot.

In an embodiment, the second slot is determined according to the first slot and a slot offset t; or a slot offset t is determined according to the second slot and the first slot; or the first time slot is determined according to the second slot and a slot offset t; where the slot offset t is a positive integer.

In an embodiment, the slot offset t is an integer greater than or equal to a first threshold m1 and less than or equal to a second threshold m2, where m1 and m2 are positive integers, and m1 is less than m2.

In an embodiment, the manner of determining the first threshold m1 includes one of the following: the first threshold m1 is determined according to received first indication signaling; the first threshold m1 is determined according to an agreed manner; the first threshold m1 is determined according to a first time interval f1 and a carrier spacing; or the first threshold m1 is determined according to the capability to process CSI.

In an embodiment, the manner of determining the second threshold m2 includes one of the following: the second threshold m2 is determined according to received second indication signaling; the second threshold m2 is determined according to an agreed manner; the second threshold m2 is determined according to a second time interval f2 and a carrier spacing; or the second threshold m2 is determined according to the capability to process CSI.

In an embodiment, the slot offset t is less than the first threshold m1, and the HARQ corresponding to the first CSI report and the HARQ corresponding to the second CSI report have the same HARQ ID.

In an embodiment, the slot offset t is greater than or equal to the first threshold m1, and the HARQ corresponding to the first CSI report and the HARQ corresponding to the second CSI report have the same HARQ ID; or the HARQ corresponding to the first CSI report and the HARQ corresponding to the second CSI report have different HARQ IDs.

In an embodiment, the slot offset t is greater than or equal to the second threshold m2, and the feedback module 602 is further configured to ignore the second CSI report corresponding to the second sub-CSI.

In an embodiment, the slot offset t is greater than or equal to the second threshold m2, and the feedback module 602 is further configured to receive third indication signaling, re-acquire the first CSI that is second-type precoding information, and feed back the first CSI.

In an embodiment, the slot offset t is greater than or equal to the second threshold m2, and the feedback module 602 is further configured to receive fourth indication signaling, re-acquire the first CSI that is first-type precoding information, and feed back the first CSI.

In an embodiment, the slot offset t is greater than or equal to the second threshold m2, and the feedback module 602 is further configured to receive fifth indication signaling, re-acquire the first sub-CSI and the second sub-CSI, and feed back the first sub-CSI and the second sub-CSI.

In an embodiment, the slot offset t is greater than or equal to the second threshold m2, and the feedback module 602 is further configured to receive sixth indication signaling, re-acquire the first sub-CSI, and feed back the first sub-CSI.

In an embodiment, the slot offset t is greater than or equal to the second threshold m2, and the feedback module 602 is further configured to receive seventh indication signaling, re-acquire the second sub-CSI, and feed back the second sub-CSI.

In an embodiment, the second uplink transmission resource is a PUSCH, and the number of effective transmitted bits of the second uplink transmission resource is greater than the number of bits corresponding to the second sub-CSI.

In an embodiment, the second uplink transmission resource is a PUCCH, and the number of effective transmitted bits of the second uplink transmission resource is greater than the number of bits corresponding to the second sub-CSI.

In an embodiment, the second uplink transmission resource is a PUCCH, and the PUCCH is configured to transmit a reserved bit of a static HARQ codebook.

In some embodiments, the number of effective transmitted bits of one uplink transmission resource refers to the number of transmitted bits that the uplink transmission resource can carry under its corresponding modulation and coding scheme.

In an embodiment, the second uplink transmission resource is a PUCCH, and the PUCCH is used for transmitting second CSI. The second CSI herein is different from the first CSI, and the transmission priority of the second CSI is reduced to transmit the second sub-CSI.

FIG. 7 is a structure diagram of a CSI receiving apparatus according to an embodiment of the present application. As shown in FIG. 7, the CSI receiving apparatus includes a receiving module 701 and a combination module 702. The receiving module 701 is configured to receive at least two pieces of sub-CSI on at least two uplink transmission resources. The combination module 702 is configured to combine the at least two pieces of sub-CSI into first CSI.

In an embodiment, the receiving module 701 is configured to receive first sub-CSI on a first uplink transmission resource and receive second sub-CSI on a second uplink transmission resource, where the at least two pieces of sub-CSI include the first sub-CSI and the second sub-CSI.

In an embodiment, the first uplink transmission resource and the first sub-CSI correspond to a first CSI report, and the second uplink transmission resource and the second sub-CSI correspond to a second CSI report.

For example, the receiving module 701 is configured to receive the first sub-CSI fed back over a first slot and receive the second sub-CSI fed back over a second slot, where the second slot is larger than the first slot.

In an embodiment, the second slot is determined according to the first slot and a slot offset t; or a slot offset t is determined according to the second slot and the first slot; or the first time slot is determined according to the second slot and a slot offset t; where the slot offset t is a positive integer.

In an embodiment, the slot offset t is an integer greater than or equal to a first threshold m1 and less than or equal to a second threshold m2, where m1 and m2 are positive integers, and m1 is less than m2.

In an embodiment, the manner of determining the first threshold m1 includes one of the following: the first threshold m1 is determined according to sent first indication signaling; the first threshold m1 is determined according to an agreed manner; the first threshold m1 is determined according to a first time interval f1 and a carrier spacing; or the first threshold m1 is determined according to the capability of the terminal to process CSI.

In an embodiment, the manner of determining the second threshold m2 includes one of the following: the second threshold m2 is determined according to sent second indication signaling; the second threshold m2 is determined according to an agreed manner; the second threshold m2 is determined according to a second time interval f2 and a carrier spacing; or the second threshold m2 is determined according to the capability of the terminal to process CSI.

In an embodiment, the slot offset t is less than the first threshold m1, and the HARQ corresponding to the first CSI report and the HARQ corresponding to the second CSI report have the same HARQ ID.

In an embodiment, the slot offset t is greater than or equal to the first threshold m1, and the HARQ corresponding to the first CSI report and the HARQ corresponding to the second CSI report have the same HARQ ID; or the HARQ corresponding to the first CSI report and the HARQ corresponding to the second CSI report have different HARQ IDs.

In an embodiment, the apparatus further includes a sending module 703. The slot offset t is greater than or equal to the second threshold m2, and the sending module 703 is configured to send third indication signaling for instructing the terminal to re-acquire the first CSI that is second-type precoding information, and receive the first CSI. Alternatively, the sending module 703 is further configured to send fourth indication signaling for instructing the terminal to re-acquire the first CSI that is first-type precoding information, and receive the first CSI. Alternatively, the sending module 703 is further configured to send fifth indication signaling for instructing the terminal to re-acquire the first sub-CSI and the second sub-CSI, and receive the first sub-CSI and the second sub-CSI. Alternatively, the sending module 703 is further configured to send sixth indication signaling for instructing the terminal to re-acquire the first sub-CSI, and receive the first sub-CSI. Alternatively, the sending module 703 is further configured to send seventh indication signaling for instructing the terminal to re-acquire the second sub-CSI, and receive the second sub-CSI.

In an embodiment, the second uplink transmission resource is a PUSCH, and the number of effective transmitted bits of the second uplink transmission resource is greater than the number of bits corresponding to the second sub-CSI.

In an embodiment, the second uplink transmission resource is a PUCCH, and the number of effective transmitted bits of the second uplink transmission resource is greater than the number of bits corresponding to the second sub-CSI.

In an embodiment, the second uplink transmission resource is a PUCCH, and the PUCCH is configured to transmit a reserved bit of a static HARQ codebook.

In an embodiment, the second uplink transmission resource is a PUCCH, and the PUCCH is used for transmitting second CSI. The second CSI herein is different from the first CSI, and the transmission priority of the second CSI is reduced to transmit the second sub-CSI.

The above CSI receiving apparatus can execute the CSI receiving method provided by the embodiments of the present application and has functional modules and effects corresponding to the executed method. For technical details not described in detail in the embodiments, reference may be made to the CSI receiving method provided by the embodiments of the present application.

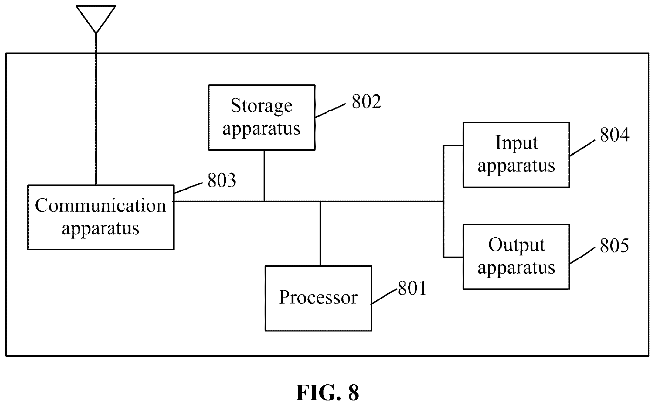

FIG. 8 is a structure diagram of a communication node according to an embodiment of the present application. As shown in FIG. 8, the communication node provided by the present application may be a terminal or a base station and includes one or more processors 801 and a storage apparatus 802. One or more processors 801 may be provided in the communication node, and one processor 801 is illustrated as an example in FIG. 8. The storage apparatus 802 is configured to store one or more programs, and the one or more programs are executed by the one or more processors 801 to cause the one or more processors 801 to implement the CSI feedback method and the CSI receiving method described in the embodiments of the present application. The communication node further includes a communication apparatus 803, an input apparatus 804, and an output apparatus 805.

The processor 801, the storage apparatus 802, the communication apparatus 803, the input apparatus 804, and the output apparatus 55 in the communication node may be connected via a bus or in other manners, and the connection via a bus is illustrated as an example in FIG. 8.

The input apparatus 804 may be configured to receive inputted digital or character information and generate key signal input related to user settings and function control of the communication node. The output apparatus 805 may include display devices such as a display screen.

The communication apparatus 803 may include a receiver and a sender. The communication apparatus 803 is configured to feed back and receive CSI under the control of the processor 801.

As a computer-readable storage medium, the storage apparatus 802 may be configured to store software programs, computer-executable programs and modules, such as program instructions/modules (for example, the splitting module 601 and the feedback module 602 in the CSI feedback apparatus) corresponding to the CSI feedback method and the CSI receiving method provided by the embodiments of the present application. The storage apparatus 802 may include a program storage region and a data storage region. The program storage region may store an operating system and an application program required by at least one function. The data storage region may store data created according to the use of the device. In addition, the storage apparatus 802 may include a high-speed random-access memory and may also include a non-volatile memory, such as at least one magnetic disk memory, a flash memory, or another non-volatile solid-state memory. In some examples, the storage apparatus 802 may include memories which are remotely disposed with respect to the processor 801. These remote memories may be connected to the communication node via a network. Examples of the preceding network include, but are not limited to, the Internet, an intranet, a local area network, a mobile communication network, and a combination thereof.

The embodiments of the present application further provide a storage medium. The storage medium is configured to store a computer program, and the computer program, when executed by a processor, causes the processor to implement any method provided by the present application. The storage medium is configured to store a computer program, and the computer program, when executed by a processor, causes the processor to implement any method provided by the embodiments of the present application.

For example, the method to be implemented may be a CSI feedback method. The method includes that first CSI is split into at least two pieces of sub-CSI, and the at least two pieces of sub-CSI are fed back over at least two uplink transmission resources.

The computer storage medium in the embodiments of the present application may adopt any combination of one or more computer-readable media. The computer-readable medium may be a computer-readable signal medium or a computer-readable storage medium. The computer-readable storage medium may be an electrical, magnetic, optical, electromagnetic, infrared or semiconductor system, apparatus or device, or any combination thereof. Examples of the computer-readable storage medium may include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory or any suitable combination thereof. The computer-readable storage medium may be any tangible medium that contains or stores a program for use by or in connection with an instruction execution system, apparatus or device.

The computer-readable signal medium may include a propagated data signal with computer-readable program codes embodied therein, for example, in a baseband or as a part of a carrier wave. The data signal propagated may be in multiple forms, including but not limited to an electromagnetic signal, an optical signal or any suitable combination thereof. The computer-readable signal medium may further be any computer-readable medium that is not a computer-readable storage medium and can communicate, propagate or transport a program for use by or in connection with an instruction execution system, apparatus or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination thereof. The programming languages include object-oriented programming languages such as Java, Smalltalk, and C++ and may further include conventional procedural programming languages such as C or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet through an Internet service provider).

The above are only example embodiments of the present application.

It is to be understood by those skilled in the art that the term "user terminal" covers any suitable type of wireless user device, for example, a mobile phone, a portable data processing apparatus, a portable web browser or a vehicle-mounted mobile station.

Generally speaking, the embodiments of the present application may be implemented in hardware or special-purpose circuits, software, logic or any combination thereof. For example, some aspects may be implemented in hardware while other aspects may be implemented in firmware or software that may be executed by a controller, a microprocessor or other computing apparatuses.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a ROM, a RAM, or an optical memory device and system (for example, a digital video disc (DVD) or a compact disc (CD)). Computer-readable media may include non-transitory storage media. The data processor may be any type suitable for the local technical environment, for example, but not limited to, a general-purpose computer, a special-purpose computer, a microprocessor, a digital signal processor (DSP), an application-specific integrated circuit (ASIC), a field-programmable gate array (FGPA), and a processor based on a multi-core processor architecture.

## Claims

1. A channel state information feedback method, comprising:
splitting first channel state information into at least two pieces of sub-channel state information; and
feeding back the at least two pieces of sub-channel state information over at least two uplink transmission resources.

2. The channel state information feedback method of claim 1, wherein feeding back the at least two pieces of sub-channel state information over the at least two uplink transmission resources comprises:
feeding back first sub-channel state information over a first uplink transmission resource; and
feeding back second sub-channel state information over a second uplink transmission resource;
wherein the at least two pieces of sub-channel state information comprise the first sub-channel state information and the second sub-channel state information.

3. The channel state information feedback method of claim 2, wherein the first uplink transmission resource and the first sub-channel state information correspond to a first channel state information report; and the second uplink transmission resource and the second sub-channel state information correspond to a second channel state information report.

4. The channel state information feedback method of claim 2, wherein feeding back the first sub-channel state information over the first uplink transmission resource and feeding back the second sub-channel state information over the second uplink transmission resource comprise:
feeding back the first sub-channel state information over a first slot; and feeding back the second sub-channel state information over a second slot; wherein the second slot is larger than the first slot.

5. The channel state information feedback method of claim 4, wherein the second slot is determined according to the first slot and a slot offset t; or a slot offset t is determined according to the second slot and the first slot; or the first slot is determined according to the second slot and a slot offset t; wherein the slot offset t is a positive integer.

6. The channel state information feedback method of claim 5, wherein the slot offset t is an integer greater than or equal to a first threshold m1 and less than or equal to a second threshold m2, wherein m1 and m2 are positive integers, and m1 is less than m2.

7. The channel state information feedback method of claim 6, wherein a manner of determining the first threshold m1 comprises one of: determining the first threshold m1 according to received first indication signaling; determining the first threshold m1 according to an agreed manner; determining the first threshold m1 according to a first time interval f1 and a carrier spacing; or determining the first threshold m1 according to a capability to process channel state information, CSI.

8. The channel state information feedback method of claim 6, wherein a manner of determining the second threshold m2 comprises one of: determining the second threshold m2 according to received second indication signaling; determining the second threshold m2 according to an agreed manner; determining the second threshold m2 according to a second time interval f2 and a carrier spacing; or determining the second threshold m2 according to a capability to process channel state information.

9. The channel state information feedback method of claim 5, wherein the slot offset t is less than a first threshold m1, and a hybrid automatic repeat request, HARQ, corresponding to a first channel state information report and an HARQ corresponding to a second channel state information report have a same HARQ identifier, ID.

10. The channel state information feedback method of claim 6, wherein the slot offset t is greater than or equal to the first threshold m1, and an HARQ corresponding to a first channel state information report and an HARQ corresponding to a second channel state information report have a same HARQ ID; or an HARQ corresponding to a first channel state information report and an HARQ corresponding to a second channel state information report have different HARQ IDs.

11. The channel state information feedback method of claim 6, wherein the slot offset t is greater than or equal to the second threshold m2, and a second channel state information report corresponding to the second sub-channel state information is ignored.

12. The channel state information feedback method of claim 6, wherein the slot offset t is greater than or equal to the second threshold m2, and the method further comprises one of:
receiving third indication signaling, re-acquiring the first channel state information, and feeding back the first channel state information, wherein the first channel state information is second-type precoding information;
receiving fourth indication signaling, re-acquiring the first channel state information, and feeding back the first channel state information, wherein the first channel state information is first-type precoding information;
receiving fifth indication signaling, re-acquiring the first sub-channel state information and the second sub-channel state information, and feeding back the first sub-channel state information and the second sub-channel state information;
receiving sixth indication signaling, re-acquiring the first sub-channel state information, and feeding back the first sub-channel state information; or
receiving seventh indication signaling, re-acquiring the second sub-channel state information, and feeding back the second sub-channel state information.

13. The channel state information feedback method of claim 2, wherein the second uplink transmission resource is a physical uplink shared channel, PUSCH, and a number of effective transmitted bits of the second uplink transmission resource is greater than a number of bits corresponding to the second sub-channel state information.

14. The channel state information feedback method of claim 2, wherein the second uplink transmission resource is a physical uplink control channel, PUCCH, and a number of effective transmitted bits of the second uplink transmission resource is greater than a number of bits corresponding to the second sub-channel state information.

15. The channel state information feedback method of claim 2, wherein the second uplink transmission resource is a PUCCH, and the PUCCH is configured to transmit a reserved bit of a static HARQ codebook.

16. The channel state information feedback method of claim 2, wherein the second uplink transmission resource is a PUCCH, the PUCCH is configured to transmit second channel state information, and a transmission priority of the second channel state information is reduced to transmit the second sub-channel state information.

17. A channel state information receiving method, comprising:
receiving at least two pieces of sub-channel state information over at least two uplink transmission resources; and
combining the at least two pieces of sub-channel state information into first channel state information.

18. The channel state information receiving method of claim 17, wherein receiving the at least two pieces of sub-channel state information over the at least two uplink transmission resources comprises:
receiving first sub-channel state information over a first uplink transmission resource; and
receiving second sub-channel state information over a second uplink transmission resource;
wherein the at least two pieces of sub-channel state information comprise the first sub-channel state information and the second sub-channel state information.

19. The channel state information receiving method of claim 18, wherein the first uplink transmission resource and the first sub-channel state information correspond to a first channel state information report; and the second uplink transmission resource and the second sub-channel state information correspond to a second channel state information report.

20. The channel state information receiving method of claim 18, wherein receiving the first sub-channel state information over the first uplink transmission resource and receiving the second sub-channel state information over the second uplink transmission resource comprise:
receiving the first sub-channel state information fed back over a first slot; and receiving the second sub-channel state information fed back over a second slot; wherein the second slot is larger than the first slot.

21. The channel state information receiving method of claim 20, wherein the second slot is determined according to the first slot and a slot offset t; or a slot offset t is determined according to the second slot and the first slot; or the first slot is determined according to the second slot and a slot offset t; wherein the slot offset t is a positive integer.

22. The channel state information receiving method of claim 21, wherein the slot offset t is an integer greater than or equal to a first threshold m1 and less than or equal to a second threshold m2, wherein m1 and m2 are positive integers, and m1 is less than m2.

23. The channel state information receiving method of claim 22, wherein a manner of determining the first threshold m1 comprises one of: determining the first threshold m1 according to sent first indication signaling; determining the first threshold m1 according to an agreed manner; determining the first threshold m1 according to a first time interval f1 and a carrier spacing; or determining the first threshold m1 according to a capability of a terminal to process channel state information, CSI.

24. The channel state information receiving method of claim 22, wherein a manner of determining the second threshold m2 comprises one of: determining the second threshold m2 according to sent second indication signaling; determining the second threshold m2 according to an agreed manner; determining the second threshold m2 according to a second time interval f2 and a carrier spacing; or determining the second threshold m2 according to a capability of the terminal to process channel state information.

25. The channel state information receiving method of claim 22, wherein the slot offset t is less than the first threshold m1, and a hybrid automatic repeat request, HARQ, corresponding to a first channel state information report and an HARQ corresponding to a second channel state information report have a same HARQ identifier, ID.

26. The channel state information receiving method of claim 22, wherein the slot offset t is greater than or equal to the first threshold m1, and an HARQ corresponding to a first channel state information report and an HARQ corresponding to a second channel state information report have a same HARQ ID; or an HARQ corresponding to a first channel state information report and an HARQ corresponding to a second channel state information report have different HARQ IDs.

27. The channel state information receiving method of claim 22, wherein the slot offset t is greater than or equal to the second threshold m2, and the method further comprises one of:
sending third indication signaling for instructing a terminal to re-acquire the first channel state information, and receiving the first channel state information, wherein the first channel state information is second-type precoding information;
sending fourth indication signaling for instructing a terminal to re-acquire the first channel state information, and receiving the first channel state information, wherein the first channel state information is first-type precoding information;
sending fifth indication signaling for instructing a terminal to re-acquire the first sub-channel state information and the second sub-channel state information, and receiving the first sub-channel state information and the second sub-channel state information;
sending sixth indication signaling for instructing a terminal to re-acquire the first sub-channel state information, and receiving the first sub-channel state information; or
sending seventh indication signaling for instructing a terminal to re-acquire the second sub-channel state information, and receiving the second sub-channel state information.

28. The channel state information receiving method of claim 18, wherein the second uplink transmission resource is a physical uplink shared channel, PUSCH, and a number of effective transmitted bits of the second uplink transmission resource is greater than a number of bits corresponding to the second sub-channel state information.

29. The channel state information receiving method of claim 18, wherein the second uplink transmission resource is a physical uplink control channel, PUCCH, and a number of effective transmitted bits of the second uplink transmission resource is greater than a number of bits corresponding to the second sub-channel state information.

30. The channel state information receiving method of claim 18, wherein the second uplink transmission resource is a PUCCH, and the PUCCH is configured to transmit a reserved bit of a static HARQ codebook.

31. The channel state information receiving method of claim 18, wherein the second uplink transmission resource is a PUCCH, the PUCCH is configured to transmit second channel state information, and a transmission priority of the second channel state information is reduced to transmit the second sub-channel state information.

32. A channel state information feedback apparatus, comprising a splitting module and a feedback module; wherein
the splitting module is configured to split first channel state information into at least two pieces of sub-channel state information; and
the feedback module is configured to feed back the at least two pieces of sub-channel state information over at least two uplink transmission resources.

33. A channel state information receiving apparatus, comprising a receiving module and a combination module; wherein
the receiving module is configured to receive at least two pieces of sub-channel state information on at least two uplink transmission resources; and
the combination module is configured to combine the at least two pieces of sub-channel state information into first channel state information.

34. A communication node, comprising:
at least one processor; and
a storage apparatus configured to store at least one program;
wherein the at least one program, when executed by the at least one processor, causes the at least one processor to implement the channel state information feedback method of any one of claims 1 to 16 or the channel state information receiving method of any one of claims 17 to 31.

35. A storage medium storing a computer program which, when executed by a processor, causes the processor to implement the channel state information feedback method of any one of claims 1 to 16 or the channel state information receiving method of any one of claims 17 to 31.
